# EUROPEAN PATENT APPLICATION

(11) **EP 0 978 631 A1**
(43) Date of publication of application: **09.02.2000**
(21) Application number: 97918441.3
(22) Date of filing: 26.03.1997
(51) Int. Cl.: F01C 1/16

(54) **STEAM-DRIVEN PROPELLER ENGINE**

(71) Applicant: Zakrytoe Aktsionernoe Obschestvo " Nezavisimaya Energetika", 2-, Moscow, 109180 (RU)
(72) Inventor: BEREZIN, Sergei Romanovich, Moscow, 128040 (RU); VEDAIKO, Viktor Iosifovich, St.Petersburg, 191180 (RU); NOSKOV, Anatoly Nikolaevich, St.Petersburg, 195279 (RU); SHCHEGLOV, Alexandr Georgievich, Moscow, 115407 (RU)
(74) Representative: Kador & Partner
(86) International application number: PCT/RU97/00087
(87) International publication number: WO 98/42951

(57) **Abstract**

Disclosed is a steam-driven propeller engine, characterized by the fact that it comprises a device for the equilibration of the propulsion force in the bearing assemblies that are produced on the propeller side; the invention further comprises steam and oil separators. The device for equilibrating the propulsion force in the bearing assemblies is designed like a cavity, and is disposed between the shaft and the casing. Said device is connected on one side to the steam source, and on the other to an exhaust pipe by means of throttle canals. The cavity is situated in the casing on both sides from the propellers, and runs along the lateral surface of the shaft on the portion opposing the direction of operation of the propulsion force. The steam and oil separators are equipped with elements for carrying off the steam and/or oil.

## Description

### Field of the Invention.

The invention concerns to field of a mechanical engineering, in particular to steam extension machines of unvolumetric displacement, namely to steam-driven propeller engines intended for transformation of steam energy into mechanical energy.

### Description of the Prior Art.

It is known the steam-driven propeller engine (SU, A, 1838632), comprising tank, inside which there is the camera of high pressure with drive and driven screws in a linkage placed in it, output reducer and synchronizing transmission, first of which is connected to the output shaft of the machine on the one hand, and with another - with the drive screw, the second transmission - is intended for a synchronization of turnovers of screws, which are placed in bearing support.

Also it is known the steam-driven propeller engine (SU, 1146482), comprising tank, with drive and driven screws in a linkage placed in it, shafts of which are placed in bearing nodes, output and synchronizing transmissions, by means of the first of which drive screw is connected to the output shaft, and by means of the second - drive and driven screws are connected among themselves, inlet and outlet branch pipes for feed and vending of a working body, in particular steam, cylinder for compensation of axial gains, sliding detail of which is connected to the shaft of the drive screw, and greasing system of bearing nodes and mentioned transmissions, thus output and synchronizing transmissions are located on the different sides from the mentioned screws, and inlet branch pipe and cylinder are connected with a source a steam.

Disadvantage of known devices is the rather low efficiency stipulated by losses in bearing nodes in because of a penetration in them of stream from area of high pressure and presence of axial and radial overtension from operation of screws. Besides, the known machines have small service life in view of the increased wear of bearing nodes and transmissions.

### Summary of the Invention

The task put in a basis of the present invention is to create the steam-driven propeller engine possessing increased efficiency while increasing of its a motor-resource by improving of seals of operation and technological clearances between sliding and motionless details of the steam-driven propeller engine, including clearances between screws and of more effective utilization of a working body, and also by the equilibration of forces operating on solid of revolution, including in bearing nodes.

The set task is solved by that the known steam-driven propeller engine comprising tank, with drive and driven screws in a linkage placed in it, shafts of which are placed in bearing nodes, output and synchronizing transmissions, by means of the first of which drive screw is connected to the output shaft, and by means of the second - drive and driven screws are connected among themselves, inlet and outlet branch pipes for feed and vending of a working body, in particular steam, cylinder for compensation of axial gains, sliding detail of which is connected to the shaft of the drive screw, and greasing system of bearing nodes and mentioned transmissions, thus output and synchronizing transmissions are located on the different sides from the mentioned screws, and inlet branch pipe and cylinder are connected with a source a steam, it is supplied with the device for an equilibration of jet gains in bearing nodes originating on the part of screws, both separators a steam and oil placed on shafts between screws and bearing nodes, thus the device for an equilibration of jet gains in bearing nodes is executed as a space formed between the shaft and tank and connected on the one side with a source a steam, and on the other side - by means of throttling channels with the outlet branch pipe, and the space is made in tank on the both sides from screws and is placed along a lateral area of the shaft on a site located opposite to a direction of operation of jet gains, thus separators of steam and oil are supplied with units of a vending of steam and / or oil.

It is expedient, that each separator of steam and oil is made in the form of seal rings, between which the units of a vending of steam and / or oil are located.

It is preferable, that each unit of a vending of steam and / or oil is made in the form of, at least, two spaces, each of which is located between conversion to each other seal rings, and the first space - a drainage one, is located on the side of a bearing node, is connected by the channel with the atmosphere, and the second space is located on the side of the screw, is connected by means of the channel with the outlet branch pipe.

It is expedient, that the unit of vending of the steam and / or oil is supplied by the mechanism of a forced vending of steam and oil.

It is expedient, that the mechanism of a forced vending of steam and / or oil is made in the form of the diaphragm, located between conversion to each other seal rings with clearances, one of which from the side of a bearing node is connected with the channel connected to a hydraulic reservoir of the system of greasing, and the second clearance located on the side of the screw, is connected with the channel connected to an atmosphere, thus on a surface of the shaft or the diaphragm on a site of their interaction the opposite directed screw, which inputs are connected with an atmosphere, and outputs with an appropriate clearance, thus the screw groove connected with a clearance, which is connected with a hydraulic reservoir, is executed with a direction appropriate to a direction of the drive screw, with the possibility of a support of a forced vending of the penetrated oil in a hydraulic reservoir.

### Brief Description of the Drawings.

On fig. 1 the general view of the steam-driven propeller engine is represented.

On fig. 2-cut À-À on fig. 1.

On fig. 3 the separator of steam and oil of the steam-driven propeller engine is represented.

On fig. 4 the separator of steam and oils executed with the mechanism of their forced vending is represented.

### The Best Variant to Carry out the Invention.

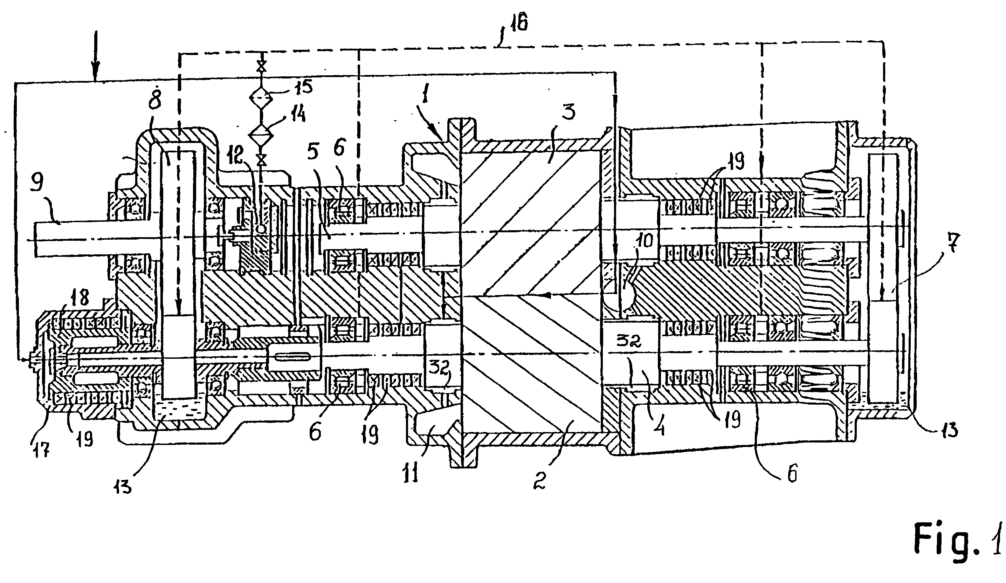

The steam-driven propeller engine according to the invention comprises tank 1 (fig. 1), in the camera of high pressure of which the drive 2 and driven 3 screws in a linkage, the shafts 4 and 5 of which are placed in the bearing nodes 6 are located. The screws are connected among themselves by synchronizing transmission 7, gears of which are placed on shafts 4 and 5 on the one side of screws. On the other side of screws 2 and 3 the output transmission 8, intended for removal of output power and connected on the one side with the drive screw 2, and on the other side - with the output shaft 9 of the machine is located.

The inlet and outlet branch pipes 10 and 11 (fig. 1) are made for feed and vending the steam, the first one is connected with the camera of high pressure and with the source of the steam ensuring feed of the heat-carrier under high pressure in the said camera (represented as an arrow and solid line).

The system of greasing of bearing nodes 6 and transmissions 7 and 8 is made in the form of the pump 12 (fig. 1) with a drive from the output shalt 9. The input of the pump 12 is hydraulically connected to a hydraulic reservoir 13, and the output of the pump 12 through the cooler 14 of oil and filter 15 - with a forcing oil collector 16, ensuring feed of oil in a zone of transmissions 7 and 8, and also to the bearing node 6 (represented as an arrow and dashed line).

For an equilibration of axial gains forming on screws 2 and 3 and, as a corollary, in bearing nodes 6, the steam-driven propeller engine (fig. 1) is supplied with the cylinder 17 for compensation of axial gains, the piston 18 of which is connected to the shaft 4 of the drive screw 2, thus the space of the cylinder 17 is connected with a source of the steam.

On shafts 4 and 5 of the screws 2 and 3 between bearing nodes 6 and said screws, i.e. in zones of the most probable touch of steam and the oil, the separators of steam and oil are located. Each separator of steam and oil is made in the form of placed in some numbers seal rings 19, some of which are conversed to each other with the possibility of preventing of a penetration of steam or oil from the opposite directions. Thus between the seal rings 19, conversed to each other, the units of vending the steam and / or oil are located.

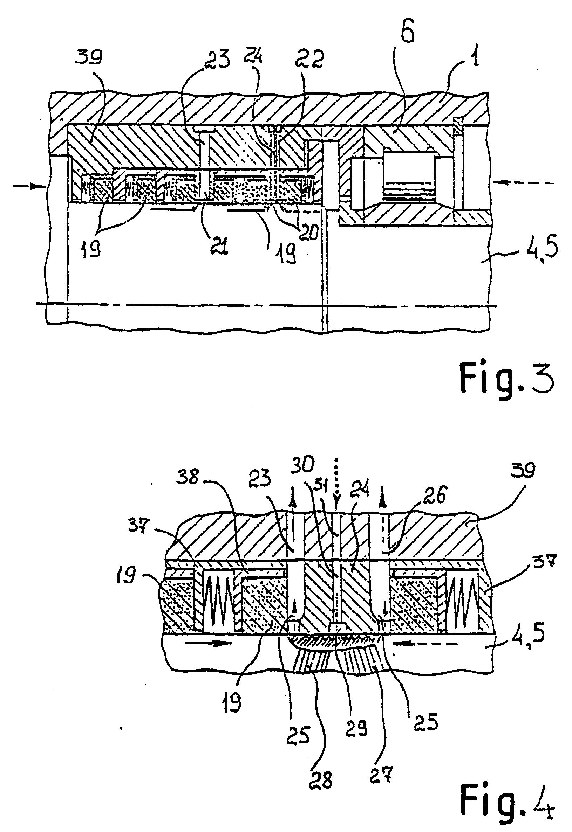

The unit of vending the steam and / or oil is made in the form of, at least, two spaces 20 and 21 (fig.3,4), each of which is located between the seal rings 19, and the first 20, located on the side of a bearing node, is connected by the channel 22 with the atmosphere - executes the function of a drainage space, and the second space 21, located on the side of the appropriate screw, is connected by means of the channel 23 with the outlet branch pipe. For increase the efficiency of isolation of the camera of high pressure from oil each unit of a vending of steam and / or oil is made with the mechanism of a forced vending of steam and oil.

The mechanism of a forced vending of steam and / or oil is made in the form of the diaphragm 24 (fig.4), located between conversed to each other seal rings 19 with clearances 25, one of which from the side of the bearing node 6 is connected with the channel 26 of a hydraulic reservoir 13 of greasing system, and the second clearance located on the side of the screw, is connected with the channel 23, connected with the outlet branch pipe 11.

On a surface of the shaft 4 and 5 (fig.4) on a site of their interaction with diaphragm 24 the opposite directed screw grooves 27 and 28 are made, inputs of which are connected by means of ring recess 29 and channel 30 made in diaphragm 24 with the atmosphere, and outputs - with an appropriate clearance 25, thus the screw groove 27, connected with a clearance 25, connected with a hydraulic reservoir 13, is made with a direction appropriate to a direction of the drive screw 2 for supports of a forced vending of oil in a hydraulic reservoir 13 by the popping of it from a clearance 25 by pressure of the air, providing, thus, the reliable isolation of the oil and steam environments promoting the increase of the efficiency and life expectancy of the machine in a whole. It is possible the execution of screw grooves 27 and 28 in diaphragm 24 on a site of its interaction with the shall of the screw. The channel 30 is connected with the atmosphere by means of the channel 31.

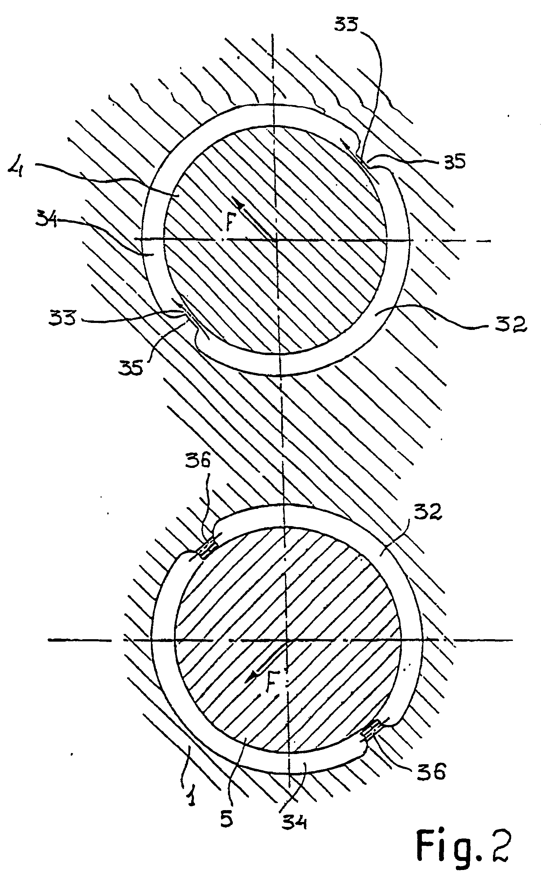

The device for an equilibration of jet gains in the bearing nodes also is intended for reaching of this effect. The device (fig.2) is located on shaft 4 and 5 between screws 2 and 3 and the bearing nodes 6. Each device is made in the form of a space 32, formed between the shaft 4 or 5 and tank 1 and connected on the one side with a source of steam, and on the other side - by means of, at least one throttling channel 33 with the outlet branch pipe 11, in particular through the intermediate camera 34. On fig. 2 the variant of execution of the throttling channel 33 in the form of a slot formed between the shaft of the screw and a hanging indent 35 of tank 1 is represented. In the other variant (fig.2) throttling channels 33 are made in the form of the holes 36, placed in hanging indents 35. The hanging indents 35 are made on tank 1 along the shaft 4 and 5 of the appropriate screw 2 and 3 and divide a space 32 and intermediate camera 34 among themselves.

The space 32 is made in tank 1 and is placed along a lateral area of the shaft 4 or 5 on a site located opposite to a direction of operation of jet gains.

With the purpose of additional increasing of the efficiency of sharing a steam from oil, there are the node for sealing and separator of steam from oil between the piston 18 (fig. 1) and cylinder 17 for compensation of axial gains sequentially located in a direction from its space.

In one of variants the seal ring 19 (fig.3,4) is made in the form of a barrel 37 with placed in it and spring-loaded concerning it seal unit executed with a casing 38. The seal rings 19, located on shafts 4 and 5, are placed in the intermediate tank 39.

The operation of the steam-driven propeller engine is carried out as follows.

The steam under high pressure comes in an inlet branch pipe 10 and reduces in rotation screws 2 and 3 (fig. 1,3 and 4). Completed of steam comes out through the outlet branch pipe 11 under pressure exceeding the atmospheric one. At the same time the steam from its source under high pressure comes into the cylinder 17, where exposing on the piston 18, connected with the shaft 4, forms the force opposite to axial gains, stipulated, in particular by interaction of screws 2 and 3 among themselves and with the heat-carrier. During the transformation of energy of the heat-carrier in mechanical energy the steam under high pressure constantly moves in a space 32 (fig.2) of the device for an equilibration of jet gains in the bearing nodes 6. In spaces 32, placed along a lateral area of the shaft 4 and 5 on sites opposite located to a direction of operation of jet gains on the side of screws, by the pressure the steam on the shaft a radial gain "F", compensating operation of jet gains and unloading, thus, the bearing nodes 6 arises in these sites. Besides, at steam coming through the throttling channels 33 from the space 32 into the intermediate camera 34 and further into the outlet branch pipe 11 its condensation happens. The liquid, formed during the steam condensation, fills in the operation and technological clearances, reducing thus probability of its penetration in a zone of the bearing nodes at a simultaneous support of effective unloading of the bearing nodes.

The pump 12 gives oil under pressure through a filter 15 and cooler 14 to transmissions 7 and 8, and also in the bearing nodes 6.

Penetration of oil into the camera of high pressure, and the steam into a zone of operation of the bearing nodes and transmissions essentially reduces the efficiency of the machine and life expectancy of its separate nodes. For exception it the following is stipulated.

In the case of an output of the steam under high pressure for bounds of the camera of high pressure and first numbers of the seal rings 19, the steam (on fig. 3 and 4 is represented as arrow and solid line) hits in a space 21 and further by means of the channel 23 - in the outlet branch pipe II. Taking into account, that pressure of the steam in an inlet branch pipe 10 exceeds the atmospheric one, a significant part of it, penetrated through spaces and the seal rings 19 will be removed for bounds of transmissions and the seal nodes. The rest of the steam in a small amount hits through the consequent numbers of the seal rings 19 in a space 20, connected with the atmosphere. From the other side, i.e. from the side of the bearing node 6, the penetrated through the seal rings 19 oil hits in the same space 20.

The diaphragm 24, which ensures the removal of the penetrated oil in a hydrotank 13, and the steam - in the atmosphere hinders the touch of oil and the steam in the space 20.

The mechanism of a forced vending of the steam and / or oils is applied for a support of stabile leading out of oil and steam. According to variant represented on fig.4, while rotation of the shaft with the screw 2 or 3 opposite directed screw grooves executed on the shaft, working as inclined Archimedian screw pumps, draw in the air (is represented as arrow with points) from an atmosphere through the channel, direct stream of an air on one groove on meeting to penetrated oil and on other groove - towards steam and condensate, pick them up and transport the oil in a hydraulic reservoir 13 on clearances 25 and channels 26, and steam and condensate on channels 23 - into the atmosphere. Thus the reliable isolation of oil and steam is created.

### The Industrial Usability.

The present invention can be used in power installations, ground and water vehicles.

## Claims

1. The steam-driven propeller engine comprising tank, with drive and driven screws in a linkage placed in it, shafts of which are placed in bearing nodes, output and synchronizing transmissions, by means of the first of which drive screw is connected to the output shaft, and by means of the second - drive and driven screws are connected among themselves, inlet and outlet branch pipes for feed and vending of a working body, in particular steam, cylinder for compensation of axial gains, sliding detail of which is connected to the shaft of the drive screw, and greasing system of bearing nodes and mentioned transmissions, thus output and synchronizing transmissions are located on the different sides from the mentioned screws, and inlet branch pipe and cylinder are connected with a source a steam *characters in that* it is supplied with the device for an equilibration of jet gains in bearing nodes originating on the part of screws, both separators a steam and oil placed on shafts between screws and bearing nodes, thus the device for an equilibration of jet gains in bearing nodes is executed as a space formed between the shaft and tank and connected on the one side with a source a steam, and on the other side - by means of throttling channels with the outlet branch pipe, and the space is made in tank on the both sides from screws and is placed along a lateral area of the shaft on a site located opposite to a direction of operation of jet gains, thus separators of steam and oil are supplied with units of a vending of steam and/ or oil.

2. The steam-driven propeller engine on item 1 *characters in that* each separator of steam and oil is made in the form of seal rings, between which the units of a vending of steam and/ or oil are located

3. The steam-driven propeller engine on item 1, 2, *characters in that* each unit of a vending of steam and/ or oil is made in the form of, at least, two spaces, each of which is located between conversion to each other seal rings, and the first space - a drainage one, is located on the side of a bearing node, is connected by the channel with the atmosphere, and the second space is located on the side of the screw, is connected by means of the channel wit the outlet branch pipe.

4. The steam-driven propeller engine on item 1, 2, 3, *characters in that* the unit of vending of the steam and / or oil is supplied with the mechanism of a forced vending of steam and oil.

5. The steam-driven propeller engine till item 4 *characters in that* the mechanism of a forced vending of steam and / or oil is made in the form of the diaphragm, located between conversion to each other seal rings with clearances, one of which from the side of a bearing node is connected with the channel connected to a hydraulic reservoir of the system of greasing, and the second clearance located on the side of the screw, is connected with the channel connected to an atmosphere, thus on a surface of the shaft or the diaphragm on a site of their interaction the opposite directed screw, which inputs are connected with an atmosphere, and outputs with an appropriate clearance, thus the screw groove connected with a clearance, which is connected with a hydraulic reservoir, is executed with a direction appropriate to a direction of the drive screw.

6. The steam-driven propeller engine till item 1 *characters in that* separators of steam and oil are located in the cylinder for compensation of axial gains between its sliding and motionless details.
